# EUROPÄISCHE PATENTANMELDUNG

(11) **EP 1 657 661 A2**
(43) Veröffentlichungstag der Anmeldung: **17.05.2006**
(21) Anmeldenummer: 05023112.5
(22) Anmeldetag: 21.10.2005
(51) Int. Cl.: G06F 21/00

(54) **Verfahren zur Kontrolle der Zugangsberechtigung von Benutzern zu Datenanbietern im Internet und anderen Netzwerken von Datenverarbeitungsgeräten**

(30) Priorität: 22.10.2004 DE 102004052708
(71) Anmelder: Inter Content KG, 20077 Hamburg (DE)
(72) Erfinder: Veldkamp, Achim Dr., 22455 Hamburg (DE); Schellenberg, Stefan, 22455 Hamburg (DE)
(74) Vertreter: UEXKÜLL & STOLBERG

(57) **Zusammenfassung**

Die vorliegende Erfindung betrifft ein Verfahren zur Kontrolle der Zugangsberechtigung von Benutzern, die jeweils mit einem Benutzer-Datenverarbeitungsendgerät z.B. über das Internet auf Daten von Datenanbietern zugreifen können. Um eine hohe Sicherheit ohne erhöhten apparativen Aufwand zu erreichen, ist vorgesehen, dass jedem sich anmeldenden Benutzer ein Benutzername zugewiesen wird, der in einem Zentralrechner in einer Benutzerdatenbank gespeichert wird, und ferner durch den Zentralrechner in dem Benutzer-Datenverarbeitungsendgerät eine Cookie-Datei gespeichert wird, der ein Wert zugeordnet ist, der ebenfalls in der Benutzerdatenbank dem Benutzernamen zugeordnet gespeichert wird, und dass bei einem Zugriffsversuch auf zugangsbeschränkte Daten eines Anbieters durch den Zentralrechner das Vorhandensein des Benutzernamens in der Benutzerdatenbank kontrolliert wird und ferner die Cookie-Datei aus dem Benutzer-Datenverarbeitungsendgerät ausgelesen und deren Wert mit dem in der Benutzerdatenbank gespeicherten verglichen wird und der Zugriff auf die zugangsbeschränkten Daten nur bei Übereinstimmung dieser Werte gewährt wird, woraufhin die Cookie-Datei in dem Benutzer-Datenverarbeitungsendgerät durch den Zentralrechner gelöscht und durch eine neue Cookie-Datei mit einem neuen Wert ersetzt wird, wobei der Wert der neuen Cookie-Datei als aktueller Wert zu dem betreffenden Benutzer in der Benutzerdatenbank des Zentralrechners gespeichert wird

## Beschreibung

Die Erfindung betrifft ein Verfahren zur Kontrolle der Zugangsberechtigung von Benutzern zu Datenanbietern im Internet und anderen Netzwerken von Datenverarbeitungsgeräten, wobei jeder Benutzer jeweils mit einem Benutzer-Datenverarbeitungsendgerät auf Daten von Datenanbietern zugreifen kann.

Derartige Verfahren zur Kontrolle der Zugangsberechtigung finden im Internet verbreitet Anwendung, wenn Benutzer auf die Daten bestimmter Anbieter zugreifen wollen. Die einfachste und am weitesten verbreitete Methode besteht darin, dass jeder Benutzer bei der Anmeldung einen Benutzernamen und ein Passwort erhält, wobei dann bei der späteren Kontrolle der Zugangsberechtigung die Übereinstimmung des von dem Benutzer an seinem Benutzer-Datenverarbeitungsendgerät eingegebenen Passworts mit dem in einer entsprechenden Datenbank in einem Zentralrechner gespeicherten kontrolliert wird.

Für bestimmte Zwecke ist eine solche Kontrolle der Zugangsberechtigung allerdings nicht sicher genug, wenn z.B. aus Gründen des Jugendschutzes verlangt wird, dass bestimmte zugangsbeschränkte Inhalte von Datenanbietern für Jugendliche mit hoher Sicherheit nicht zugänglich sein sollen. Das einfache Verfahren mit einem Passwort ist zu diesem Zweck nicht sicher genug, da sich nicht ausschließen lässt, dass ein Jugendlicher ein Passwort in Erfahrung bringt und dieses dann auch noch an eine Vielzahl von Bekannten weitergeben kann, die dann alle Zugang auf die aus Jugendschutzgründen zugangsbeschränkten Daten eines Anbieters erhalten können.

Weitaus sicherere Methoden der Kontrolle der Zugangsberechtigung sind in sicherheitsensitiven Bereichen bekannt, die jedoch einen höheren apparativen Aufwand auf Seiten des Benutzers voraussetzen. Bekannt sind z.B. sogenannte Smart-Cards, wobei jeder Benutzer dann ein entsprechendes Smart-Card-Lesegerät an seinem Benutzer-Datenverarbeitungsendgerät benötigt, sowie eine für ihn vorbereitete Smart-Card bei dem Anbieter bestellen muss.

Ferner ist vorgeschlagen worden, an dem Benutzer-Datenverarbeitungsendgerät, z.B. integriert in das Mousepad, einen Fingerabdrucksensor vorzusehen, auf den der Benutzer einen Finger auflegen muss, um die Fingerabdruckdaten des Benutzers zu erfassen, die dann mit denen in einer Datenbank für den Benutzer hinterlegten verglichen werden. Dies ermöglicht eine Identifizierung des Benutzers mit hoher Sicherheit, allerdings ist der apparative Aufwand nicht unerheblich, so dass diese Lösung für eine flächendeckende Verfahrensweise z.B. im Zusammenhang mit dem Jugendschutz gegenwärtig nicht praktikabel ist.

Ebenfalls bekannt sind Hardware-Schlösser, so genannte "Dongels". Hierbei handelt es sich um ein Hardware-Modul, das an eine Schnittstelle des Datenverarbeitungsgerätes angeschlossen wird. Der Dongel reagiert auf Anfragen in der Software. Nur wenn der Dongel vorhanden ist, kann die entsprechende Software gestartet werden, bzw. kann ein Zugriff auf die Inhalte eines Anbieters erfolgen. Der Dongel muss bei jedem Start der Software bzw. bei jedem Zugriff auf die Inhalte eines Datenanbieters angeschlossen sein. Auch diese Lösung verursacht einen hohen apparativen Aufwand und unerwünschte Kosten, da jeder Benutzer einen entsprechenden Dongel erhalten muss.

Es ist demnach Aufgabe der vorliegenden Erfindung, ein Verfahren zur Kontrolle der Zugangsberechtigung zu zugangsbeschränkten Anbietern im Internet und anderen Netzwerken von Datenverarbeitungsgeräten zu schaffen, das ohne erhöhten apparativen Aufwand arbeiten kann und gegenüber der Verbreitung von Passwörtern gesichert ist.

Zur Lösung dieser Aufgabe dient das Verfahren mit den Schritten nach Patentanspruch 1. Vorteilhafte Ausführungsformen des Verfahrens sind in den Unteransprüchen angegeben.

Danach ist vorgesehen, dass ein Zentralrechner bei jedem sich bei einem Datenanbieter anmeldenden Benutzer parallel zu seiner Zugangsvergabe (Benutzername und ggf. Passwort) eine Cookie-Datei in dem Benutzer-Datenverarbeitungsendgerät des Benutzers speichert, vozugsweise im Hintergrund. Der Cookie-Datei ist ein Wert zugeordnet, der ebenfalls in der Datenbank in dem Zentralrechner, dem Benutzer zugeordnet gespeichert wird. Bei einem späteren Zugang wird von dem Zentralrechner nicht nur die Übereinstimmung von Name (und ggf. Passwort) mit den Daten in der Datenbank kontrolliert, sondern auch die Cookie-Datei aus dem Benutzer-Datenverarbeitungsendgerät ausgelesen und ihr Wert mit dem in der Datenbank gespeicherten verglichen. Der Zugriff auf die zugangsbeschränkten Inhalte wird nur bei Übereinstimmung dieser Werte gewährt. Ferner wird dabei die Cookie-Datei auf dem Benutzer-Datenverarbeitungsendgerät gelöscht, durch den Zentralrechner eine neue Cookie-Datei mit einem neuen Wert erzeugt und in dem Benutzer-Datenverarbeitungsendgerät gespeichert, wobei der Wert der neuen Cookie-Datei als aktueller Wert zu dem betreffenden Benutzer in der Datenbank des Zentralrechners gespeichert wird. Dem Benutzer ist ein erneuter Zugriff auf die zugangsbeschränkten Daten mit dem betreffenden Benutzernamen nur möglich, wenn sich auf seinem Rechner bei dem nächsten Zugriff nunmehr die Cookie-Datei mit dem aktuellen Wert befindet. Der in der neuen Cookie-Datei enthaltene neue Wert kann entweder nach dem Zufallsprinzip oder nach einer vorbestimmten (aber geheimzuhaltenden) Regel gebildet werden.

Diese Überprüfung und Ersetzung der Cookie-Datei geschieht für den Benutzer vorzugsweise unsichtbar im Hintergrund. Es ergibt sich also für den Benutzer kein erhöhter Aufwand bei der Nutzung. Ferner wird keine spezielle Hardware benötigt. Dennoch wird so sichergestellt, dass eine Weitergabe von Benutzernamen und Passwörtern nicht zu einer Vervielfältigung von scheinbaren Zugangsberechtigungen führt. Ein Benutzer könnte zwar einen Benutzername und ein Passwort weitergeben, wobei er gleichzeitig an den neuen Benutzer auch seine Cookie-Datei durch Exportieren weitergeben müsste. Der andere Benutzer könnte so Zugriff auf die zugangsbeschränkten Daten nehmen. Allerdings wird dann bei einem Zugriff des anderen Benutzers die bei dem Zugriff durch den Zentralrechner erzeugte neue Cookie-Datei auf dem Benutzer-Datenverarbeitungsgerät des anderen Benutzers gespeichert. Für den ursprünglichen Benutzer, auf dessen Benutzer-Datenverarbeitungsendgerät noch die ursprüngliche Cookie-Datei gespeichert ist, wäre kein Zugriff auf die zugangsbeschränkten Daten mehr möglich. Aus diesem Grund werden Benutzer bei Anwendung des erfindungsgemäßen Verfahrens davon abgehalten, ihren Benutzernamen und ihre aktuelle Cookie-Datei weiterzugeben, da sie dadurch ihre eigene Zugangsberechtigung verlieren, wenn nämlich der weitere Benutzer zuerst Zugriff auf die zugriffsbeschränkten Daten nimmt, bevor der ursprüngliche Benutzer dies tut, wodurch dessen Cookie-Datei nicht mehr der zuletzt vergebenen entspricht und somit sozusagen ungültig geworden ist. In jedem Fall ist durch das erfindungsgemäße Verfahren eine gleichzeitige Weitergabe des Benutzernamens und der Cookie-Datei an eine unbestimmte Anzahl von Benutzern ausgeschlossen.

Cookie-Dateien sind im Internet und anderen Netzwerken von Datenverarbeitungsgeräten gebräuchliche Dateien mit einem Zahlenwert, die von durch einen Benutzer aufgerufenen Webseiten aus auf dem Benutzer-Datenverarbeitungsendgerät gespeichert werden.

Die Cookie-Dateien beinhalten einen Wert und eine Kennung der Webseite, von der sie stammen. Bei einem Folgebesuch kann die Webseite also technisch überprüfen, ob der Benutzer bereits auf der Seite war und ihn entsprechend identifizieren. Cookie-Dateien sind jedoch von einem Rechner zum anderen exportierbar und z.B. auch per e-mail verschickbar. Eine solche Weitergabe von Cookie-Dateien wird durch das vorliegende Verfahren verhindert bzw. im hohen Maße unattraktiv gemacht.

Es versteht sich jedoch, dass als Cookie-Datei jede Datei verwendet werden kann, die einen bestimmbaren Wert enthält und auf dem Benutzer-Datenverarbeitungsendgerät gespeichert werden kann.

Unter Zentralrechner ist das Datenverarbeitungsgerät zu verstehen, dass die Vergabe und die Kontrolle des Zugangs zu den Inhalten eines oder mehrerer Datenanbieter vornimmt. Der Zentralrechner kann auch aus mehreren Datenverarbeitungsgeräten bestehen. Ferner kann der Zentralrechner identisch sein mit dem Rechner, auf dem sich die Inhalte des Datenanbieters befinden. Vorzugsweise ist der Zentralrechner jedoch ein hiervon abweichender Rechner. Der Zentralrechner wirkt also vergleichbar einem Eingangstor, das nur bei positiver Zugangskontrolle passiert werden kann und das den einzigen Zugangsweg zu den angeschlossenen zugangsbeschränkten Inhalten von Datenanbietern bildet.

Das Verfahren kann insbesondere im Bereich des Jugendschutzes eingesetzt werden, um Kinder und Jugendliche vor Webseiten zu schützen und die Verbreitung von Passwörtern unter Kindern und Jugendlichen zu unterbinden.

Im Folgenden werden einige Anwendungsbeispiele für das Verfahren angegeben.

Das erste Beispiel betrifft sogenannte Adult-Verifikation-Systeme (AVS) im Internt. Bei im Internet üblichen AVS meldet sich der Benutzer einmalig an, dabei wird seine Volljährigkeit einmalig überprüft - beispielsweise durch eine Passkontrolle im Zuge des sogenannten Postident-Verfahrens der Deutschen Post. Der Benutzer enthält nach der ersten Authentifizierung einen Benutzernamen und ein Passwort. Mit diesem Passwort kann er eine Vielzahl von zugangsbeschränkten, in diesem Fall erotischen Webseiten besuchen, die dem konkreten AVS angeschlossen sind. Da die dort vorgehaltenen Inhalte lediglich Erwachsenen gezeigt werden dürfen, soll der Benutzer durch seine ursprünglich nur ihm (und dem Internetserver der AVS-Anbieters) bekannte Kombination von Benutzernamen und Passwort identifiziert werden. Nun gilt es sicherzustellen, dass der Benutzer seine BenutzernamePasswort-Kombination nicht einfach weitergegeben hat und ein oder mehrere minderjährige Benutzer auf diese Weise Zugriff auf die für ihn oder sie verbotenen Inhalte bekommen könnte. Mit der vorliegenden Erfindung kann verhindert werden, dass der ursprüngliche, volljährige Benutzer seine Benutzername-Passwort-Kombination an einen oder mehrere Benutzer weitergeben kann, da durch die ständige Veränderung des Cookie-Wertes bei einem Zugriff eines Benutzers nur ein Benutzer Zugang erhalten kann, und daher die Weitergabe der Benutzername-Cookie-Datei-Kombination durch Export der Cookie-Datei auf einen anderen Computer unattraktiv ist.

Ein zweites mögliches Anwendungsbeispiel ist der Schutz von Download-Software-Servern. Auf einem Internet-Server werden stets die neusten Up-dates (Software-Aktualisierungen) für ein im Markt befindliches kommerzielles Produkt zum Download bereitgehalten. Der Zugang zu diesen Up-dates soll nur einer bestimmten Benutzergruppe vorbehalten sein, die z.B. einen besonderen Servicevertrag, mit dem die up-dates anbietenden Unternehmen abgeschlossen hat. Es gilt zu verhindern, dass ein mit einem Servicevertrag ausgestatteter Kunde seine Zugangsdaten (Benutzername/Passwort) für den Download-Bereich an weitere befreundete Unternehmen weitergibt. Mit Hilfe des Verfahrens der vorliegenden Erfindung kann sichergestellt werden, dass der eine berechtigte Kunde des Servicevertrages den Zugang zum Download-Bereich haben kann. Eine Weitergabe von Export der zugehörigen Cookie-Datei ist hochgradig unattraktiv, da dadurch der ursprünglich berechtigte Kunde seine Zugangsmöglichkeit verliert.

Statt Software-Downloads kann der gesperrte Bereich auch andere zu schützende Informationen beinhalten. So könnte beispielsweise auch verhindert werden, dass in firmeninternen Netzwerken ein Mitarbeiter seine Zugangsberechtigung beispielsweise zu den aktuellen Umsatzstatistiken, Pressespiegeln, Einsatzplanungen etc. an andere Mitarbeiter weitergibt, die dann unerlaubt und regelmäßig und eigenständig ebenfalls Zugang zu den Daten hätten.

Im Folgenden wird ein Ausführungsbeispiel anhand der Zeichnungen beschrieben, in denen:
- Fig. 1:: eine schematische Darstellung des Vorgangs der Benutzerregistrierung zeigt,
- Fig. 2:: eine schematische Darstellung der Vorgänge beim Zugriff auf Daten zeigt, und
- Fig. 3:: eine schematische Darstellung der Vorgänge bei einer unerlaubten Cookie-Weitergabe zeigt.

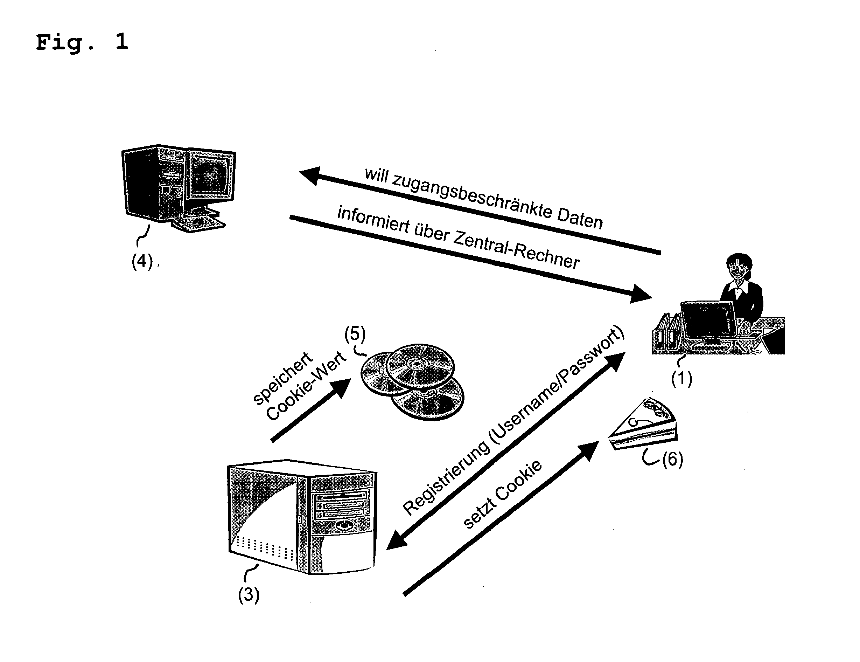

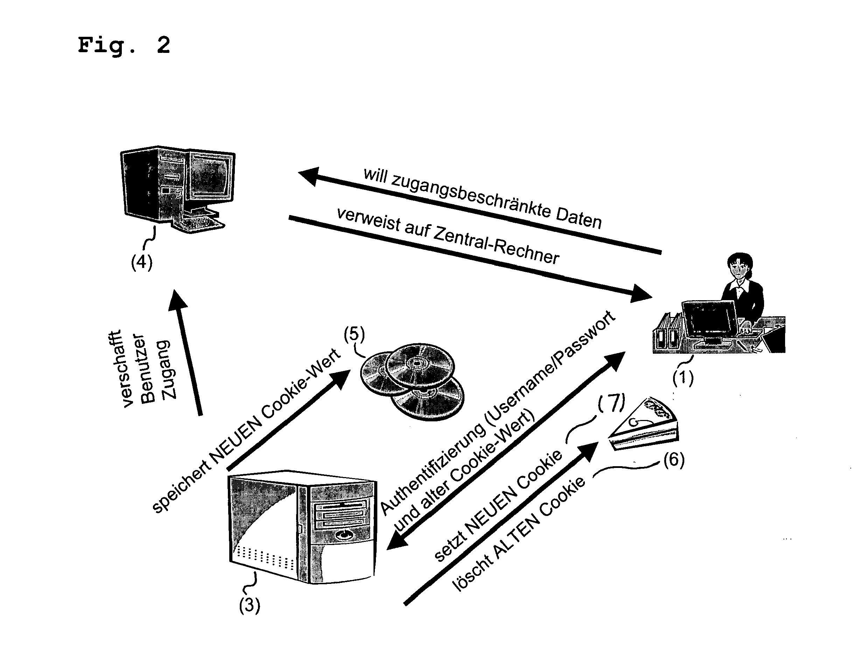

In Figur 1 ist die erstmalige Erteilung der Zugangsberechtigung dargestellt. Das Benutzer-Datenverarbeitungsendgerät 1, zum Beispiel ein Computer oder ein Mobiltelefon, ist über ein Netzwerk, zum Beispiel das Internet oder ein Mobilfunknetz, mit dem Zentralrechner 3 und dem Rechner 4 eines Anbieters verbunden. Nach Überprüfung der Identität des Benutzers erhält dieser einen Benutzernamen, gegebenenfalls zusätzlich auch ein Passwort, zugewiesen. Der Benutzername kann dabei eine beliebige Abfolge von Zeichen sein, die nicht mit dem bürgerlichen Namen des Benutzers übereinstimmen muss. Darüber hinaus wird bei der Anmeldung durch den Zentralrechner 3 auf dem Benutzer-Datenverarbeitungs-endgerät 1 eine Cookie-Datei 6 mit einem Wert X gespeichert. Der Wert der Cookie-Datei ist ebenfalls auf einer Datenbank 5 des Zentralrechners 3 dem Benutzernamen zugeordnet gespeichert. Möchte der Benutzer über sein Benutzer-Datenverarbeitungsendgerät 1 auf die auf dem Rechner 4 verfügbaren zugangsbeschränkten Daten eines Anbieters zugreifen, lässt der Rechner 4 des Anbieters die Zugangsberechtigung des Benutzers zunächst durch den Zentralrechner 3 überprüfen. Hierzu hat der Benutzer zunächst seinen Benutzernamen einzugeben. Danach prüft der Zentralrechner 3, welcher Wert diesem Benutzernamen in der Datenbank 5 zugeordnet ist und ob sich auf dem Benutzer-Datenverarbeitungsendgerät 1 eine Cookie-Datei befindet, die den gleichen Wert X enthält, wie er dem Benutzernamen auch in der Datenbank 5 des Zentralrechners 3 zugeordnet ist. Stimmt der Wert der Cookie-Datei 6 auf dem Benutzer-Datenverarbeitungsendgerät 1 mit dem dem Benutzernamen zugeordneten Wert in der Datenbank 5 des Zentralrechners 3 überein, erhält der Benutzer Zugang auf die zugangsbeschränkten Inhalte auf dem Rechner 4 des Anbieters. Mit der Gestattung des Zugriffs löscht der Zentralrechner 3 auf dem Benutzer-Datenverarbeitungsendgerät 1 die bisherige Cookie-Datei 6 und ersetzt diese durch eine neue Cookie-Datei 7 der ein neuer Wert X' zugeordnet ist. Der Wert X' kann durch den Zentralrechner z.B. unter Verwendung eines Zufallsgenerators oder unter Verwendung eines vorgegebenen Algorithmus erzeugt werden. Ebenso wird in der Datenbank 5 des Zentralrechners 3 der bisherige dem Benutzernamen zugeordnete Wert X durch den neuen Wert X' der neuen Cookie-Datei 7 ersetzt. Ein erneuter Zugriff des Benutzers unter seinem Benutzernamen ist damit nur von einem Benutzer-Datenverarbeitungsendgerät möglich, auf dem sich die aktuelle Cookie-Datei 7 mit dem Wert X' befindet. Dies ist in Figur 2 dargestellt. Bei jedem erneuten Zugriff des Benutzers wird die bisherige Cookie-Datei durch den Zentralrechner 3 gelöscht und durch eine neue Cookie-Datei (z.B. 7', 7" usw. ) mit einem neuen aktuellen Wert (z.B. X", X"' usw.) ersetzt. Entsprechend wird bei jedem erneuten Zugriff in der Datenbank 5 des Zentralrechners 3 dem Benutzernamen der neue aktuelle Wert (z.B. X" , X''' usw.) zugeordnet.

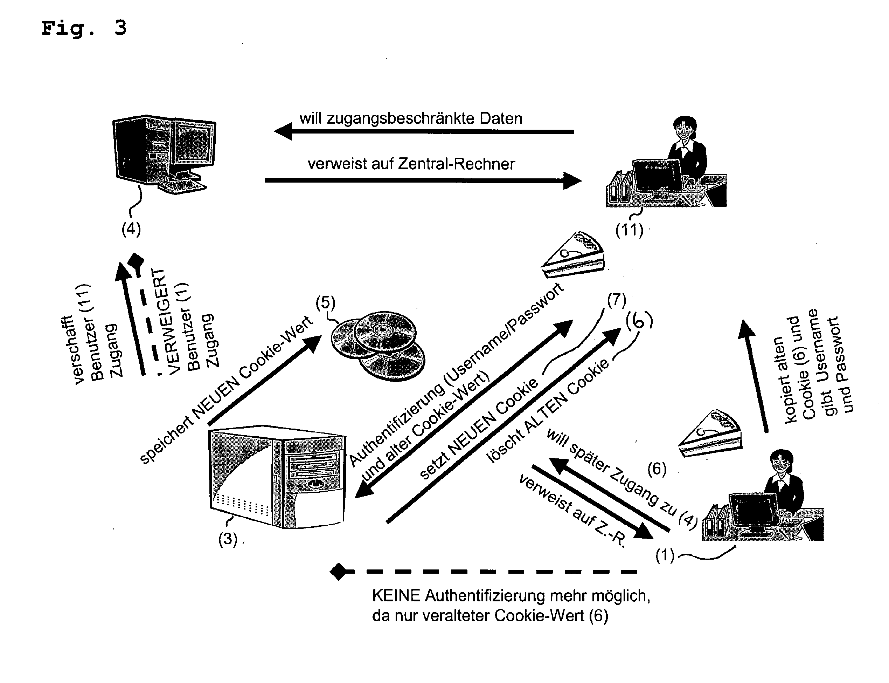

In Figur 3 hat der Benutzer eine Kopie der Cookie-Datei 6 und seinen Benutzernamen, gegebenenfalls auch ein Passwort, an einen anderen Benutzer weiter gegeben. Dieser hat die Cookie-Datei 6 auf seinem Benutzer-Datenverarbeitungsendgerät 11 gespeichert. Nunmehr greift der andere Benutzer über das Datenverarbeitungsendgerät 11 auf die zugangsbeschränkten Inhalte auf dem Rechner 4 des Anbieters zu. Nach Eingabe des Benutzernamens, ggf. auch des Passworts, prüft der Zentralrechner 3, ob sich auf dem Datenverarbeitungsendgerät 11 eine Cookie-Datei mit dem Wert X befindet, der in der Datenbank 5 des Zentralrechners 3 dem Benutzernamen zugeordnet ist. Dies ist hier der Fall, da der registrierte Benutzer seinen Benutzernamen und die Cookie-Datei 6 an den Benutzer des Datenverarbeitungsendgerätes 11 weitergegeben hat. Nunmehr löscht der Zentralrechner 3 jedoch die Cookie-Datei 6 von dem Datenverarbeitungsgerät 11 und ersetzt diese durch eine aktuelle Cookie-Datei 7 mit dem neuen Wert X'. Dem Benutzernamen ist nunmehr in der Datenbank 5 des Zentralrechners 3 der Wert X' der aktuellen Cookie-Datei 7 zugeordnet. Ein erneuter Zugriff auf die zugangsbeschränkten Daten auf dem Rechner 4 des Anbieters ist nunmehr nur von einem Benutzer-Datenverarbeitungsendgerät möglich, auf dem sich eine Cookie-Datei mit dem aktuellen Wert X' befindet. Versucht nunmehr der registrierte Nutzer von seinem Benutzer-Datenverarbeitungsendgerät 1 auf die zugangsbeschränkten Daten auf dem Rechner 4 des Anbieters zurückzugreifen, wird ihm, obwohl er seinen Benutzernamen und ggf. auch sein Passwort eingibt, der Zugriff von dem Zentralrechner 3 verweigert, da sich auf dem Benutzer-Datenverarbeitungs-endgerät 1 keine Cookie-Datei mit dem dem Benutzernamen in der Datenbank 5 des Zentralrechners 3 zugeordneten Wert X' befindet. Der Benutzer des Benutzer-Datenverarbeitungsendgerätes 1 muss sich also zunächst von dem Benutzer des Datenverarbeitungsendgerätes 11 eine Kopie der aktuellen Cookie-Datei 7 beschaffen, um erneut Zugriff auf die zugangsbeschränkten Daten auf dem Rechner 4 des Anbieters zu erhalten. Bereits dies ist für den Benutzer des Benutzer-Datenverarbeitungsendgerätes 1 mit erheblichen Mühen verbunden. Nahezu unmöglich wird die Beschaffung der Cookie-Datei mit dem aktuellen Wert, wenn der Benutzer des Datenverarbeitungsendgerätes 11 die Cookie-Datei 7 mit dem Wert X' bereits an andere Benutzer weitergegeben hat und sich diese bereits ihrerseits von anderen Datenverarbeitungsendgeräten Zugang zu den zugangsbeschränkten Daten verschafft haben. In diesem Fall hat der nächste Benutzer nämlich bereits eine neue Cookie-Datei mit einem neuen aktuellen Wert, zum Beispiel X'', zugeordnet erhalten. Entsprechend ist dann dem Benutzernamen in der Datenbank 5 des Zentralrechners 3 dann der neue Wert X" zugeordnet. Der Benutzer des Benutzer-Datenverarbeitungsendgerätes 1 würde damit selbst dann keinen Zugriff zu den Inhalten des Rechners 4 des Anbieters erhalten, wenn er eine Kopie der Cookie-Datei 7 mit dem Wert X' erhielte. Vielmehr müsste er eine Kopie der Cookie-Datei mit dem aktuellen Wert X " von dem jeweils letzten Benutzer erhalten. Dies ist für den registrierten Benutzer mit erheblichen Mühen verbunden, wenn nicht gar unmöglich. Die Weitergabe der aktuellen Cookie-Datei durch den Benutzer des Benutzer-Datenverarbeitungsendgerätes 1 begründet daher für diesen die Gefahr, dass er die Kontrolle über die Cookie-Datei mit dem dem Benutzernamen in der Datenbank 5 des Zentralrechners 3 zugeordneten aktuellen Wert verliert, das heißt, dass ihm de facto der "Schlüssel" zu den Inhalten des Anbieters auf dem Rechner 4 verloren geht. Dies macht die Weitergabe der aktuellen Cookie-Datei in höchstem Maße unattraktiv und stellt einen effektiven Schutz gegen die Weitergabe der Cookie-Datei dar.

## Patentansprüche

1. Verfahren zur Kontrolle der Zugangsberechtigung von Benutzern, die jeweils mit einem Benutzer-Datenverarbeitungsendgerät über das Internet oder ein anderes Netzwerk auf Daten von Datenanbietern zugreifen können, wobei bei dem Verfahren
jedem sich anmeldenden Benutzer ein Benutzername zugewiesen wird, der in einem Zentralrechner in einer Benutzerdatenbank gespeichert wird, und ferner durch den Zentralrechner in dem Benutzer-Datenverarbeitungsendgerät eine Cookie-Datei gespeichert wird, der ein Wert zugeordnet ist, der ebenfalls in der Benutzerdatenbank dem Benutzernamen zugeordnet gespeichert wird,
bei einem Zugriffsversuch auf -zugangsbeschränkte Daten eines Anbieters durch den Zentralrechner das Vorhandensein des Benutzernamens in der Benutzerdatenbank kontrolliert wird und ferner die Cookie-Datei aus dem Benutzer-Datenverarbeitungsendgerät ausgelesen und deren Wert mit dem in der Benutzerdatenbank gespeicherten verglichen wird und der Zugriff auf die zugangsbeschränkten Daten nur bei Übereinstimmung dieser Werte gewährt wird, woraufhin die Cookie-Datei in dem Benutzer-Datenverarbeitungsendgerät durch den Zentralrechner gelöscht und durch eine neue Cookie-Datei mit einem neuen Wert ersetzt wird, wobei der Wert der neuen Cookie-Datei als aktueller Wert zu dem betreffenden Benutzer in der Benutzerdatenbank des Zentralrechners gespeichert wird.

2. Verfahren nach Anspruch 1, bei dem
jedem sich anmeldenden Benutzer neben einem Benutzernamen noch ein Passwort zugewiesen wird, das in der Benutzerdatenbank dem Benutzernamen zugeordnet gespeichert wird,
bei einem Zugriff auf zugangsbeschränkte Daten eines Anbieters durch den Zentralrechner die Übereinstimmung von eingegebenen Benutzernamen und Passwort mit denen in der Benutzerdatenbank kontrolliert werden und nur bei positivem Ergebnis Zugang gewährt wird.

3. Verfahren nach Anspruch 1 oder 2, bei dem das Speichern und Löschen der Cookie-Dateien in den Benutzer-Datenverarbeitungsendgeräten im Hintergrund durchgeführt wird, so dass die Benutzer das Speichern und Ändern der Cookie-Dateien nicht wahrnehmen.

4. Verfahren nach einem der vorhergehenden Ansprüche, wobei bei jedem Zugriff eines Benutzers auf zugangsbeschränkte Daten nach Feststellung der Übereinstimmung des Wertes der aus dem Benutzer-Datenverarbeitungsendgerät ausgelesenen Cookie-Datei mit dem in der Datenbank für den Benutzer gespeicherten Wert die Cookie-Datei in dem Benutzer-Datenverarbeitungsendgerät durch den Zentralrechner gelöscht und durch eine Cookie-Datei mit neuem Wert ersetzt wird, der in der Datenbank als zu dem Benutzer gehörig gespeichert wird.

5. Verfahren nach einem der vorhergehenden Ansprüche, wobei der Wert der Cookie-Datei eine alphanumerische Zeichenkette ist.

6. Verfahren nach Anspruch 5, wobei als Wert der Cookie-Datei ein numerische Wert verwendet wird.

7. Verfahren nach einem der vorhergehenden Ansprüche, wobei in dem Zentralrechner eine Cookie-Datei mit neuem Wert unter Verwendung eines Zufallszahlengenerators erzeugt wird.

8. Verfahren nach einem der Ansprüche 1 bis 6, wobei in dem Zentralrechner eine Cookie-Datei mit neuem Wert unter Verwendung unter Verwendung eines vorgegebenen Algorithmus in Abhängigkeit von verfügbaren Variablen erzeugt wird.
